# EUROPEAN PATENT APPLICATION

(11) **EP 3 511 229 A1**
(43) Date of publication of application: **17.07.2019**
(21) Application number: 17847964.8
(22) Date of filing: 27.06.2017
(51) Int. Cl.: B62D 11/12, B62D 11/02, F16H 48/20, F16H 48/06

(54) **CONTINUOUSLY VARIABLE TRANSMISSION STEERING MECHANISM OF TRACKED VEHICLE**

(30) Priority: 09.09.2016 CN 201610812411
(71) Applicant: Fu, Jiangbiao, Wenzhou, Zhejiang 325000 (CN); Liu, Fulin, Wenzhou, Zhejiang 325000 (CN); Chen, Bijian, Wenzhou, Zhejiang 325000 (CN)
(72) Inventor: Fu, Jiangbiao, Wenzhou, Zhejiang 325000 (CN); Liu, Fulin, Wenzhou, Zhejiang 325000 (CN); Chen, Bijian, Wenzhou, Zhejiang 325000 (CN)
(74) Representative: Cabinet Chaillot
(86) International application number: PCT/CN2017/090158
(87) International publication number: WO 2018/045791

(57) **Abstract**

A continuously variable transmission steering mechanism of a tracked vehicle, comprising a differential (1), a right drive shaft (2), a left drive shaft (3), and a continuously variable transmission (4) used for adjusting the rotational speed of the right drive shaft (2) and that of the left drive shaft (3). A left half shaft (5) and a right half shaft (6) are connected on the differential (1). The right half shaft (6) of the differential (1) is linked to the right drive shaft (2). The right drive shaft (2) rotates to drive the right half shaft (6) of the differential (1) to rotate. The left half shaft (5) of the differential (1) is linked to the left drive shaft (3). The left drive shaft (3) rotates to drive the left half shaft (5) of the differential (1) to rotate. The rotational speed ratio of the right half shaft (6) of the differential (1) to the right drive shaft (2) is equal to the rotational speed ratio of the left half shaft (5) of the differential (1) to the left drive shaft (6). The employment of the continuously variable transmission steering mechanism of the tracked vehicle, by means of continuously and precisely adjusting the rotational speeds of the left and right half shafts of the differential via the continuously variable transmission (4), implements precise turning of tracks, thus increasing the safety of the tracked vehicle traveling at a high speed.

## Description

### Technology Field

The invention relates to the technology field of tracked vehicle steering, in particular relates to a continuously variable transmission steering mechanism of tracked vehicle.

### Background

Different with the steering of wheeled vehicles, which only needs to control the steering angle of the wheel, the steering of the prior tracked vehicles is generally achieved by the speed reduction of the track on one side controlled by break and the normal running of the track on the other side, however, by this kind of control, if the track on one side is stopped when the tracked vehicle is running at a high speed, overturn accident can be caused and the risk factor is high; moreover, the steering is controlled by manual braking which has a low steering precision.

### DISCLOSURE OF THE INVENTION

### Technical Problem

The object of the invention: in order to overcome the deficiency of prior art, the invention provides a continuously variable transmission steering mechanism of a tracked vehicle, by means of continuously and precisely adjusting the rotational speeds of the left and right half shafts of the differential via the continuously variable transmission, implements precise turning of tracks, thus increasing the safety of the tracked vehicle traveling at a high speed.

### Technical Proposal

The technical proposal of the invention is: a continuously variable transmission steering mechanism of a tracked vehicle, comprising a differential, a right drive shaft, a left drive shaft, and a continuously variable transmission used for adjusting the rotational speed of the right drive shaft and that of the left drive shaft, a left half shaft and a right half shaft are connected on the differential, the right half shaft of the differential is linked to the right drive shaft, the right drive shaft rotates to drive the right half shaft of the differential to rotate, the left half shaft of the differential is linked to the left drive shaft, the left drive shaft rotates to drive the left half shaft of the differential to rotate, and the rotational speed ratio of the right half shaft of the differential to the right drive shaft is equal to the rotational speed ratio of the left half shaft of the differential to the left drive shaft.

### ADVANTAGEOUS EFFECT OF THE INVENTION

### Advantageous Effects

The employment of the above proposal, when in use of the invention, by means of controlling the rotational speeds of the right and left drive shafts via continuously variable transmission, and when the rotational speed of the right drive shaft is equal to that of the left drive shaft, the rotational speed of the right half shaft of the differential is equal to that of the left half shaft of the differential as well, thereby the tracked vehicle goes straight; when the continuously variable transmission is controlled to make the rotational speed of the right drive shaft become larger than that of the left drive shaft, the rotational speed of the right half shaft of the differential also becomes larger, thus the rotational speed of the right side track of the tracked vehicle becomes larger, thereby the left steering of the tracked vehicle can be realized; when the continuously variable transmission is controlled to make the rotational speed of the right drive shaft become smaller than that of the left drive shaft, the rotational speed of the right half shaft of the differential also becomes smaller, thus the rotational speed of the right side track of the tracked vehicle becomes smaller, thereby the right steering of the tracked vehicle can be achieved. Therefore, the continuously variable transmission steering mechanism of the invention, can continuously and precisely adjust the rotational speed of the left and right half shaft of the differential via the continuously variable transmission, implements precise turning of tracks, thus increasing the safety of the tracked vehicle traveling at a high speed.

Further arrangement of the invention is: a first right drive gear is sleeved on the right drive shaft, a second right drive gear is sleeved on the right half shaft of the differential, the first right drive gear is engaged with the second right drive gear to realize a linkage of the right half shaft of the differential and the right drive shaft.

The employment of the above further arrangement, the right half shaft of the differential is linked to the right drive shaft via the engagement between the first right drive gear and the second right drive gear, the structure is simple and the transmission performance is stable, moreover, the rotational speed of the right drive shaft can be adjusted by changing numbers of teeth of the first right drive gear and that of the second right drive gear, which is more convenient to use.

Further arrangement of the invention is: a first left drive gear is sleeved on the left drive shaft, a second left drive gear is sleeved on the left half shaft of the differential, the first left drive gear is engaged with the second left drive gear to realize a linkage of the left half shaft of the differential and the left drive shaft.

The employment of the above further arrangement, the left half shaft of the differential is linked to the left drive shaft via the engagement between the first left drive gear and the second left drive gear, the structure is simple and the transmission performance is stable, moreover, the rotational speed of the left drive shaft can be adjusted by changing numbers of teeth of the first left drive gear and that of the second left drive gear, which is more convenient to use.

### BRIEF DESCRIPTION OF DRAWINGS

### Description of the Drawings

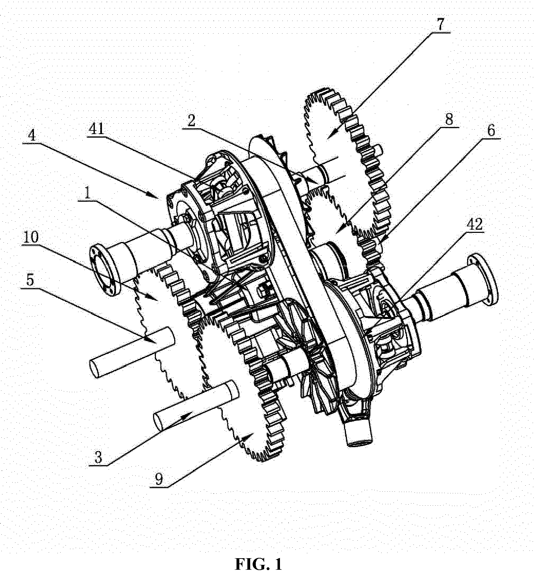

FIG. 1 shows the structure of the specific embodiment of the invention.

### PREFERRED EMBODIMENT OF THE INVENTION

### Preferred Embodiment of the Invention

As shown in FIG. 1, a continuously variable transmission steering mechanism of a tracked vehicle, comprising a differential 1, a right drive shaft 2, a left drive shaft 3, and a continuously variable transmission 4 used for adjusting the rotational speed of the right drive shaft 2 and that of the left drive shaft 3, a left half shaft 5 and a right half shaft 5 are connected on the differential 1, the right drive shaft 2 is sleeved with a first right drive gear 7, the right half shaft 6 of the differential 1 is sleeved with a second right drive gear 8, the first right drive gear 7 is engaged with the second right drive gear 8 to realize a linkage of the right half shaft 6 of the differential 1 and the right drive shaft 2, the left drive shaft 3 is sleeved with a first left drive gear 9, the left half shaft 5 of the differential 1 is sleeved with a second left drive gear 10, the first left drive gear 9 is engaged with the second left drive gear 10 to realize a linkage of the left half shaft 5 of the differential 1 and the left drive shaft 3, and the rotational speed ratio of the right half shaft 6 of the differential 1 to the right drive shaft 2 is equal to the rotational speed ratio of the left half shaft 5 of the differential 1 to the left drive shaft 3, in the specific embodiment of the invention, the rotational speed of the right half shaft 6 of the differential 1 is equal to that of the right drive shaft 2, and the rotational speed of the left half shaft 5 of the differential 1 is also equal to that of the left drive shaft 3. Wherein the differential 1 and the continuously variable transmission 4 are known to the person skilled in the art, and will not be described in details in the disclosure, in the specific embodiment of the invention, an output shaft of an engine is inserted into the differential 1 to drive the left half shaft 5 and the right half shaft 6 to drive by the planetary gear in the differential 1; the continuously variable transmission 4 adopts the cooperation between a transmission belt and two transmission wheels 41, 42 with variable working diameter to transmit power, which can realize continuous change of transmission ratio, the right drive shaft 2 and the left drive shaft 3 are respectively arranged in the two transmission wheels 41, 42, moreover, the continuously variable transmission 4 can also be hydraulic, electric, without limitation.

When the invention is in the initial state, the rotational speed of the two transmission wheels 41, 42 of the continuously variable transmission 4 are equal, that is, the rotational speed of the right drive shaft 2 and that of the left drive shaft 2 are equal, thus the rotational speed of the left half shaft 5 and that of the right half shaft 6 of the differential 1 are equal as well, thereby the tracked vehicle goes straight; when the continuously variable transmission 4 is controlled to make the rotational speed of the right drive shaft 2 become larger than that of the left drive shaft 3, the rotational speed of the right half shaft 6 of the differential 1 also becomes larger, so that the rotational speed of the right side track of the tracked vehicle becomes larger, thereby the left steering of the tracked vehicle can be realized; when the continuously variable transmission 4 is controlled to make the rotational speed of the right drive shaft 2 become smaller than that of the left drive shaft 3, the rotational speed of the right half shaft 6 of the differential 1 also becomes smaller, so that the rotational speed of the right side track of the tracked vehicle becomes smaller, thereby the right steering of the tracked vehicle can be achieved. Therefore, the continuously variable transmission steering mechanism of the invention, can continuously and precisely adjust the rotational speed of the right and left half shaft of the differential 1 via the continuously variable transmission 4, implements precise turning of tracks, thus increasing the safety of the tracked vehicle traveling at a high speed.

**Invention embodiment**

**Embodiments of the invention**

**Industrial applicability**

**Sequence table free content**

## Claims

1. A continuously variable transmission steering mechanism of a tracked vehicle, comprising a differential, a right drive shaft, a left drive shaft, and a continuously variable transmission used for adjusting the rotational speed of the right drive shaft and that of the left drive shaft, a left half shaft and a right half shaft are connected on the differential, the right half shaft of the differential is linked to the right drive shaft, the right drive shaft rotates to drive the right half shaft of the differential to rotate, the left half shaft of the differential is linked to the left drive shaft, the left drive shaft rotates to drive the left half shaft of the differential to rotate, and the rotational speed ratio of the right half shaft of the differential to the right drive shaft is equal to the rotational speed ratio of the left half shaft of the differential to the left drive shaft.

2. The continuously variable transmission steering mechanism of a tracked vehicle of claim 1, wherein a first right drive gear is sleeved on the right drive shaft, a second right drive gear is sleeved on the right half shaft of the differential, the first right drive gear is engaged with the second right drive gear to realize a linkage of the right half shaft of the differential and the right drive shaft.

3. The continuously variable transmission steering mechanism of a tracked vehicle of claim 1 or 2, wherein a first left drive gear is sleeved on the left drive shaft, a second left drive gear is sleeved on the left half shaft of the differential, the first left drive gear is engaged with the second left drive gear to realize a linkage of the left half shaft of the differential and the left drive shaft.
